# EUROPÄISCHE PATENTSCHRIFT

(11) **EP 2 784 288 B1**
(45) Veröffentlichungstag und Bekanntmachung des Hinweises auf die Patenterteilung: **19.02.2020**
(21) Anmeldenummer: 13001609.0
(22) Anmeldetag: 28.03.2013
(51) Int. Cl.: F02C 3/28

(54) **Kraftwerksanlage und Verfahren zum Erzeugen von elektrischem Strom**
Power plant and method for generating electric power
Centrale électrique et procédé de génération d'énergie électrique

(43) Veröffentlichungstag der Anmeldung: 01.10.2014
(73) Patentinhaber: Lumenion AG, 6301 Zug (CH)
(72) Erfinder: Zwinkels, Andrew, 10435 Berlin (DE)
(74) Vertreter: Ridderbusch, Oliver

(56) Entgegenhaltungen:
- EP-A2- 1 122 296
- EP-A2- 1 547 971
- EP-A2- 2 218 889
- WO-A1-2012/118511
- US-A1- 2010 175 320

## Beschreibung

Die Erfindung betrifft in einem ersten Gesichtspunkt eine Kraftwerksanlage zum Erzeugen von elektrischem Strom nach dem Oberbegriff des Anspruchs 1.

In einem weiteren Aspekt bezieht sich die Erfindung auf ein Verfahren zum Erzeugen von elektrischem Strom nach dem Oberbegriff des Anspruchs 11.

Eine gattungsgemäße Kraftwerksanlage zur Erzeugung elektrischen Stroms umfasst eine Reformer-Einheit, in welcher ein Energieträger unter Wärmezufuhr in Verbrennungsfluid umsetzbar ist, wobei die Reformer-Einheit zum Bereitstellen einer Wärmezufuhr eine Reformer-Brenneinrichtung aufweist, mit der ein Energieträger verbrennbar ist. Die Kraftwerksanlage umfasst außerdem eine Brennereinheit, in welcher durch Verbrennen des Verbrennungsfluids thermische Energie erzeugbar ist, eine Turbineneinheit, in welcher mit der thermischen Energie eine Drehbewegung erzeugbar ist, und eine Generatoreinheit, welche zum Erzeugen von elektrischem Strom von der Drehbewegung antreibbar ist.

Bei einem gattungsgemäßen Verfahren zum Erzeugen von elektrischem Strom wird in einer Reformer-Einheit ein Energieträger unter Wärmezufuhr in Verbrennungsfluid umgesetzt, zum Bereitstellen der Wärmezufuhr wird mit einer Reformer-Brenneinrichtung ein Energieträger verbrannt, in einer Brennereinheit wird das Verbrennungsfluid verbrannt und damit thermische Energie erzeugt, in einer Turbineneinheit wird die thermische Energie in eine Drehbewegung umgewandelt, eine Generatoreinheit wird von der Drehbewegung angetrieben und hierdurch wird elektrischer Strom erzeugt. Ein solches Verfahren kann beispielsweise mit einer gattungsgemäßen Kraftwerksanlage durchgeführt werden.

In vielen Ländern wird ein bedeutsamer Anteil der gesamten elektrischen Energie mit Kraftwerksanlagen der vorgenannten Art gewonnen. Die genutzten Energieträger können je nach Kraftwerksanlage verschieden sein und beispielsweise Kohle, Gas oder Öl umfassen. Diese werden von der Reformer-Einheit in das Verbrennungsfluid umgesetzt, bei welchem es sich zum Beispiel um Synthesegas handeln kann.

Bei der Reformer-Einheit kann es sich insbesondere um einen Kohlevergaser handeln. Unter Wärmezufuhr wird in diesem pulverförmige Kohle zu Synthesegas umgesetzt. Dieses wird auch als Syngas bezeichnet und ist ein wasserstoffhaltiges Gasgemisch. Die Reaktion kann beschrieben werden durch:

C + H₂O → CO + H₂ + 175,4kJ.

Anschließend kann das Synthesegas (CO + H₂) in der Brennereinheit verbrannt werden, womit thermische Energie freigesetzt wird:

CO + H₂ + O₂ → CO₂ + H₂O - 568,8kJ.

In ähnlicher Weise kann die Reformer-Einheit auch ein Gas-Reformer sein, welcher unter Wärmezufuhr Erdgas, das heißt Methan, in Synthesegas umsetzt:

CH₄ + H₂O → CO + 3H₂ + 250,1kJ.

Sodann kann ebenfalls das Synthesegas verbrannt werden, um thermische Energie freizusetzen:

CO + 3H₂ + 2,5O₂ → CO₂ + 3H₂O - 1140,1kJ.

Anstelle von Wasser kann auch Kohlendioxid in der Reformer-Einheit genutzt werden, um Kohle oder Gas umzusetzen:

C + CO₂ → 2CO + 172,5kJ

oder

CH₄ + CO₂ → 2CO + 2H₂ + 247,3kJ.

Indem zunächst Energie zur Syngas-Gewinnung aufgewendet wird und anschließend Energie durch Verbrennen des Syngases freigesetzt wird, kann insgesamt ähnlich viel Energie genutzt werden wie bei herkömmlichen, nicht gattungsgemäßen Kraftwerksanlagen, welche Kohle oder Erdgas direkt verbrennen, um thermische Energie zu gewinnen:

C + O₂ → CO₂ - 393,5kJ

oder

CH₄ + 3O₂ → CO₂ + 2H₂O - 890kJ.

Die Erfindung berücksichtigt, dass ein wachsender Anteil der insgesamt erzeugten Strommenge durch erneuerbare Energiequellen abgedeckt wird. Insbesondere werden Sonnenenergie und Windenergie verstärkt zur Stromerzeugung genutzt. Die hierbei erzeugte Energiemenge schwankt zeitlich jedoch stark. Es bestehen kaum Möglichkeiten, die hierbei anfallende überschüssige elektrische Energie in größerem Umfang zu speichern. Wie überschüssige elektrische Energie verwendet werden soll, stellt ein schwerwiegendes Problem dar. Nicht selten muss in Zeiten der verstärkten Stromerzeugung sogar für die Abnahme von elektrischer Energie gezahlt werden.

Prinzipiell ist denkbar, während einer verstärkten Stromerzeugung durch Sonnen- oder Windenergie die vorgenannte Kraftwerksanlage herunterzufahren. Ein Herunterfahren und ein erneutes Anfahren der Kraftwerksanlage sind jedoch in der Regel mit hohen Materialbelastungen verbunden. Zudem können sie bei bekannten Kraftwerksanlagen nur langsam durchgeführt werden. Die so erreichbaren Geschwindigkeiten genügen nicht, um auf eine schwankende Windmenge oder Sonneneinstrahlung effektiv reagieren zu können.

Zwar ist es bekannt, zur schnelleren Anpassung der von einer Kraftwerksanlage produzierten Strommenge ihren Wirkungsgrad zu verändern. Dazu wird beispielsweise in einem Normalbetrieb kalter Dampf dem heißen Dampf hinzugefügt, mit dem die Turbineneinheit angetrieben wird. Dadurch wird der Wirkungsgrad der Kraftwerksanlage beispielsweise von 42 % auf 39 % gesenkt. Bei einem schnellen Abfall der elektrischen Energie, die durch regenerative Energiequellen gewonnen wird, kann nun die Zugabe von kaltem Dampf beendet werden. Dadurch kann der Wirkungsgrad in kurzer Zeit auf 42 % erhöht werden. Hieran ist aber nachteilig, dass im Normalbetrieb die Kraftwerksanlage mit einem verhältnismäßig schlechten Wirkungsgrad betrieben wird. Dadurch geht viel prinzipiell nutzbare Energie verloren. Zudem können in dieser Weise nur verhältnismäßig geringe Schwankungen der verfügbaren elektrischen Energiemenge kompensiert werden.

WO 2012/118511 A1 handelt von einer Vergasungsanlage von kohlenstoffhaltigen Verbindungen.

EP 1 122 296 A2 beschreibt eine Kraftwerksanlage, bei welcher mit heißem Dampf eine Turbinen- und Generatoreinheit angetrieben wird, um elektrischen Strom zu erzeugen.

Aus US 2010/0175320 A1 ist zudem die Vergasung und weitere Umwandlung eines Ausgangsmaterials zur Gewinnung elektrischer Energie bekannt. In EP 1 122 296 A2 und EP 1 547 971 A2 sind weitere Anlagen beschrieben, um aus organischem Material elektrische Energie zu gewinnen.

Als eine **Aufgabe** der Erfindung kann daher erachtet werden, ein Verfahren zum Erzeugen elektrischen Stroms und eine Kraftwerksanlage anzugeben, welche eine effektive Anpassung an Schwankungen in der verfügbaren Menge elektrischen Stroms ermöglichen.

Diese Aufgabe wird durch die Kraftwerksanlage mit den Merkmalen des Anspruchs 1 und durch das Verfahren mit den Merkmalen des Anspruchs 11 gelöst.

Vorteilhafte Varianten der erfindungsgemäßen Kraftwerksanlage und des erfindungsgemäßen Verfahrens sind Gegenstand der abhängigen Ansprüche und werden außerdem in der folgenden Beschreibung erläutert.

Bei der Kraftwerksanlage der oben genannten Art ist erfindungsgemäß vorgesehen, dass zum Bereitstellen einer Wärmezufuhr zusätzlich zu der Reformer-Brenneinrichtung eine elektrische Heizeinheit vorgesehen ist, durch welche elektrische Energie in Wärmeenergie wandelbar ist.

Bei dem Verfahren der oben genannten Art ist erfindungsgemäß vorgesehen, dass die Wärmezufuhr zusätzlich zur Reformer-Brenneinrichtung durch eine elektrische Heizeinheit bereitgestellt wird, durch welche elektrische Energie in Wärmeenergie umgewandelt wird.

Als eine grundlegende Idee der Erfindung kann erachtet werden, dass das Verbrennungsfluid sowohl durch eine Energiezufuhr von der Reformer-Brenneinrichtung als auch durch eine Energiezufuhr von der elektrischen Heizeinheit erzeugt werden kann.

Elektrische Energie wird also zunächst von der elektrischen Heizeinheit dazu genutzt, das Verbrennungsfluid zu erzeugen. Sodann wird mit diesem thermische Energie erzeugt, welche in Bewegungsenergie und schließlich mit der Generatoreinheit erneut in elektrische Energie umgewandelt wird. In Zeiten überschüssiger elektrischer Energie kann daher die erfindungsgemäße Kraftwerksanlage einen verhältnismäßig großen Anteil dieser überschüssigen elektrischen Energie nutzen. In einem solchen Fall kann die Wärmezufuhr durch die Reformer-Brenneinrichtung reduziert werden. Dadurch verbrennt die Reformer-Brenneinrichtung eine geringere Menge des Energieträgers. Folglich kann durch Nutzung der elektrischen Energie der Energieträger gespart werden.

Als besonderer Vorteil ist es hierdurch möglich, die Menge des Energieträgers, die von der Reformer-Brenneinrichtung verbrannt wird, zu variieren, ohne dass hierdurch die Menge an Verbrennungsfluid verändert wird, die von der Reformer-Einheit erzeugt wird.

Auf eine schnelle Variation der verfügbaren Strommenge in einem externen Stromnetz kann so besonders schnell reagiert werden. Dazu wird die elektrische Energie verändert, die der elektrischen Heizeinheit zugeführt wird, und gleichzeitig wird eine Heizleistung der Reformer-Brenneinrichtung angepasst.

Durch die Umwandlung von elektrischer Energie in Wärmeenergie und über mehrere Zwischenschritte zurück in elektrische Energie kann zwar bloß etwa 40% der ursprünglichen elektrischen Energie genutzt werden. Dennoch stellt dies eine äußerst sinnvolle Nutzung der elektrischen Energie dar, verglichen mit dem Fall, dass für die Abnahme überschüssiger elektrischer Energie sogar Geld gezahlt werden muss.

In der Summe wird durch Nutzung elektrischer Energie bei der erfindungsgemäßen Kraftwerksanlage eine Energieträgermenge gespart, die ansonsten verbrannt würde. Daher wirkt die Kraftwerksanlage wie ein Speicher, der überschüssige elektrische Energie nutzt, um die verfügbare Energieträgermenge zu erhöhen.

Bei einer bevorzugten Ausführung der Erfindung ist das Verbrennungsfluid, das mit der Reformer-Einheit erzeugbar ist, Synthesegas, wie vorstehend beschrieben. Damit möglichst große Mengen elektrischer Energie von der elektrischen Heizeinheit sinnvoll genutzt werden können, werden bevorzugt in der Reformer-Einheit solche Energieträger in ein Verbrennungsfluid umgesetzt, welche eine besonders hohe Wärmezufuhr erfordern. Die hierbei zugeführte Energie kann großteils zurückgewonnen werden, wenn das Verbrennungsfluid mit der Brennereinheit verbrannt wird.

Bei einer bevorzugten Variante ist die Reformer-Einheit ein Kohlevergaser oder -verflüssiger. Hier ist also Kohle der Energieträger, der in Verbrennungsfluid umgesetzt wird und auch von der Reformer-Brenneinrichtung zum Bereitstellen einer Wärmezufuhr genutzt wird.

Alternativ oder zusätzlich kann die Reformer-Einheit auch einen Gas-Reformer umfassen, mit dem ein Gas als Energieträger in das Verbrennungsfluid umsetzbar ist. Das Gas kann beispielsweise Erdgas sein.

Grundsätzlich kann unter der Reformer-Einheit eine beliebige Einrichtung verstanden werden, die unter Energiezufuhr mit einem Energieträger ein Verbrennungsfluid erzeugt. Außer Kohle und Erdgas können prinzipiell auch beliebige organische Stoffe als Energieträger genutzt werden. Zweckmäßigerweise sollte durch Verbrennen des Verbrennungsfluids mehr Energie freigesetzt werden als durch Verbrennen des Energieträgers.

Die Wärmezufuhr von der elektrischen Heizeinheit zu der Reformer-Einheit kann in prinzipiell beliebiger Weise erfolgen.

Bei einer bevorzugten Ausgestaltung weist die Reformer-Einheit einen Wärmetauscher auf. Mit diesem ist Wärmeenergie an den Energieträger übertragbar. Dabei ist der Wärmetauscher sowohl von der Reformer-Brenneinrichtung als auch von der elektrischen Heizeinheit zur Abgabe von Wärmeenergie nutzbar. Vorteilhafterweise kann dadurch ein Wärmetauscher genutzt werden, der bereits bei herkömmlichen Reformer-Einheiten vorhanden ist. Es muss lediglich ein Anschluss für die elektrische Heizeinheit an den Wärmetauscher hinzugefügt werden. Über diesen Anschluss kann ein Medium, beispielsweise ein Gas, das von der elektrischen Heizeinheit erwärmt wird, an den Wärmetauscher weitergegeben werden.

Alternativ kann auch der Wärmetauscher allein von der Reformer-Brenneinrichtung genutzt werden. Die elektrische Heizeinheit kann dann in anderer Weise Wärme an den Energieträger übertragen.

Die elektrische Heizeinheit kann wiederum in prinzipiell beliebiger Weise elektrische Energie in Wärmeenergie umwandeln.

Beispielsweise kann die elektrische Heizeinheit elektrische Widerstandselemente zum Umwandeln von elektrischer Energie in Wärmeenergie aufweisen. Werden die Widerstandselemente genutzt, um ein Medium zu erwärmen, dass dem Wärmetauscher der Reformer-Einheit zugeführt wird, kann ein leichtes Nachrüsten herkömmlicher Kraftwerksanlagen realisiert werden. Alternativ können die Widerstandselemente aber auch benachbart zum Wärmetauscher angeordnet sein. Dadurch können sie direkt Wärme an den Energieträger abgeben und können unabhängig vom Wärmetauscher genutzt werden. Dadurch wird auch eine Redundanz erreicht, die ein Ausfallrisiko der gesamten Kraftwerksanlage verringert.

Alternativ oder zusätzlich kann die elektrische Heizeinheit auch eine Plasmafackel zum Erhitzen eines Mediums aufweisen, von welchem Wärme an den Energieträger übertragbar ist, um diesen in Verbrennungsfluid umzusetzen. Bei einer Plasmafackel wird ein Gas in ein Plasma umgewandelt. Das Plasma wird mit Hilfe eines elektrischen Feldes beschleunigt, wodurch dessen thermische Energie steigt. Vorteilhafterweise können hierdurch in schneller Weise hohe Temperaturen erreicht werden. Zudem kann eine Plasmafackel kompakt gebaut sein und ist dadurch für eine Nachrüstung herkömmlicher Kraftwerksanlagen geeignet.

Die elektrische Heizeinheit kann auch alternativ oder zusätzlich Induktionsmittel zum Erhitzen eines Mediums aufweisen. Eine Heizleistung der Induktionsmittel ist durch Verändern eines magnetischen Widerstands an den Induktionsmitteln steuerbar. Beispielsweise können die Induktionsmittel eine oder mehrere Spulen umfassen. Diese erzeugen ein Magnetfeld, welches über ein Leitmaterial zu dem zu erhitzenden Medium geführt wird. An dem Leitmaterial kann ein Luftspalt variiert werden, womit der magnetische Widerstand eingestellt wird. Dadurch kann die Leistung, die dem zu erhitzenden Medium zugeführt wird, in einfacher Weise über einen großen Bereich gesteuert werden.

Es ist eine Steuereinheit vorgesehen, mit welcher eine Heizleistung der elektrischen Heizeinheit erhöhbar und, insbesondere gleichzeitig, eine Heizleistung der Reformer-Brenneinrichtung reduzierbar ist, und umgekehrt. Die Heizleistungen der elektrischen Heizeinheit und der Reformer-Brenneinrichtung können somit entgegengesetzt zueinander verändert werden.

Die Steuereinheit ist dazu eingerichtet, abhängig von der verfügbaren Menge an elektrischer Energie in einem externen Stromnetz die Heizleistung der elektrischen Heizeinheit zu erhöhen und die Heizleistung der Reformer-Brenneinrichtung zu reduzieren. Demnach kann die Steuereinheit dazu gestaltet sein, die Heizleistung der elektrischen Heizeinheit umso höher zu setzen, je größer die verfügbare Menge an elektrischer Energie ist. Diese Menge kann beispielsweise manuell von einem Benutzer eingegeben werden. Alternativ kann die Menge an elektrischer Energie durch die Steuereinheit automatisch erfasst werden. Insbesondere kann die verfügbare Menge an elektrischer Energie anhand eines momentanen Strompreises erfasst werden. Unterschreitet der momentane Strompreis eine vorgegebene Schwelle, kann die Heizleistung der elektrischen Heizeinheit erhöht werden.

Das Einstellen der Heizleistung der elektrischen Heizeinheit kann somit abhängig von einem momentanen Strompreis erfolgen. Dieser kann manuell eingebbar sein oder mit der Steuereinheit automatisch abrufbar sein, insbesondere von einer Strombörse. Je höher die Heizleistung der elektrischen Heizeinheit gesetzt wird, desto niedriger kann die Heizleistung der Reformer-Brenneinrichtung festgesetzt werden.

Insbesondere können die Heizleistungen der elektrischen Heizeinheit und der Reformer-Brenneinrichtung durch die Steuereinheit so voneinander abhängig steuerbar sein, dass die Rate, mit der Verbrennungsfluid erzeugt wird, gleichbleibend ist. Alternativ kann die Steuerung so sein, dass sich die Rate höchstens um eine vorgegebene maximale Änderungsrate ändert. Die Funktionstüchtigkeit der Brennereinheit, der Turbineneinheit und der Generatoreinheit ist unabhängig davon, ob das Verbrennungsfluid mit Wärmeenergie von der elektrischen Heizeinheit oder der Reformer-Brenneinrichtung erzeugt wurde. Vorteilhafterweise kann daher das Verhältnis zwischen den Heizleistungen der elektrischen Heizeinheit und der Reformer-Brenneinrichtung sehr schnell geändert werden, ohne dass dies unerwünschte Auswirkungen auf die Brennereinheit, die Turbineneinheit oder die Generatoreinheit hätte.

Diese Einheiten erlauben bloß eine vergleichsweise langsame Änderung der von der Generatoreinheit erzeugten elektrischen Leistung. Gleichwohl kann auch diese langsame erlaubte Änderung genutzt werden. Dazu hält die Steuereinheit die Summe der Heizleistungen der elektrischen Heizeinheit und der Reformer-Brenneinrichtung nicht immer konstant. Vielmehr kann die Summe der Heizleistungen reduziert werden, wenn die elektrische Heizeinheit aktiviert wird und/oder die Heizleistung der elektrischen Heizeinheit erhöht wird. Dabei darf die summierte Heizleistung nur um eine vorgegebene maximale Änderungsrate reduziert werden.

Alternativ oder zusätzlich können durch die Steuereinheit die Heizleistungen der elektrischen Heizeinheit und der Reformer-Brenneinrichtung so voneinander abhängig steuerbar sein, dass eine Temperatur in der Reformer-Einheit in einem vorgegebenen Sollbereich liegt, in welchem der Energieträger in Verbrennungsfluid umsetzbar ist. Eine momentane Heizleistung der Reformer-Brenneinrichtung wird also an eine momentane Heizleistung der elektrischen Heizeinheit so angepasst, dass ein vorgegebener Temperaturbereich in der Reformer-Einheit stets eingehalten wird.

Prinzipiell kann auch ein Speicherbehälter vorgesehen sein, der ein Medium speichern kann, das von der elektrischen Heizeinheit erhitzt worden ist. Der Speicherbehälter wird gefüllt, wenn die verfügbare Menge an elektrischer Energie einen vorgegebenen Schwellwert übersteigt. Sinkt die Menge der verfügbaren elektrischen Energie, so kann der Speicherbehälter entleert werden. Damit kann die Energieträgermenge, die von der Reformer-Brenneinrichtung zur Wärmegewinnung verbrannt werden muss, weiter reduziert werden.

Alternativ oder zusätzlich kann auch ein Speicherbehälter vorgesehen sein, in dem das erzeugte Verbrennungsfluid gespeichert werden kann. Bei einem Anstieg der verfügbaren Menge an elektrischer Energie kann daher bei dieser Ausführung die Rate, mit der Verbrennungsfluid erzeugt wird, erhöht werden. Verbrennungsfluid aus dem Speicherbehälter kann sodann zu der Brennereinheit geleitet werden, wenn die verfügbare Menge an elektrischer Energie sinkt. Dadurch kann ebenfalls die Energieträgermenge, die mit der Reformer-Brenneinrichtung zur Wärmeerzeugung verbrannt werden muss, verringert werden. Zudem kann der Speicher als Puffer dienen, durch den eine gleichbleibende Menge an Verbrennungsfluid an die Brennereinheit abgegeben wird, auch wenn die eingehende Menge an Verbrennungsfluid schwankt.

Durch Nutzung des Speicherbehälters verbrennt die Reformer-Brenneinrichtung nicht bereits größere Mengen des Energieträgers, wenn die Heizleistung der elektrischen Heizeinheit verringert wird. Vielmehr wird die Menge des Energieträgers erst erhöht, wenn eine Füllmenge im Speicherbehälter unter einen vorgebbaren Schwellwert oder auf null sinkt.

Bevorzugt ist die Steuereinheit dazu eingerichtet, bei einer Reduzierung der Heizleistung der elektrischen Heizeinheit unter einen vorgebbaren Schwellwert oder auf null ein Weitergeben des erhitzten Mediums aus dem Speicherbehälter zu veranlassen. Ebenso wird ein Weitergeben veranlasst, wenn ein vorgegebener maximaler Füllgrad des Speicherbehälters erreicht wird. In diesem Fall wird gleichzeitig die Menge des Energieträgers reduziert, die der Reformer-Brenneinrichtung zugeführt wird. Dadurch kann die Turbineneinheit weiterhin mit einer im Wesentlichen gleichbleibenden Gesamtleistung betrieben werden. Eine Änderung der Heizleistung der elektrischen Heizeinheit ist in diesem Fall nicht erforderlich.

Alternativ oder zusätzlich kann auch vorgesehen sein, dass Verbrennungsfluid aus dem Speicherbehälter nicht oder nicht vollständig zur Brennereinheit weitergeleitet wird. Stattdessen kann es für andere Vorgänge genutzt werden. Handelt es sich bei dem Verbrennungsfluid um Synthesegas, kann dieses beispielsweise in einem Verfahren zur Kohleverflüssigung oder -vergasung genutzt werden, insbesondere im Fischer-Tropsch-Verfahren.

Grundsätzlich kann der Erfindungsgedanke auch für beliebige Reformer-Einheiten genutzt werden, die nicht Bestandteil einer Kraftwerksanlage sind. Auch bei einer solchen Reformer-Einheit kann vorgesehen sein, dass eine Wärmezufuhr sowohl durch eine Reformer-Brenneinrichtung als auch durch eine elektrische Heizeinheit möglich ist. Die zur Kraftwerksanlage beschriebenen Ausführungsvarianten können auch für diese Reformer-Einheit genutzt werden. Im Unterschied zu der Kraftwerksanlage sind lediglich keine Brennereinheit, Turbineneinheit und Generatoreinheit vorhanden. Stattdessen kann die Reformer-Einheit beispielsweise Bestandteil einer Anlage zur Gas- und/oder Flüssigkeitserzeugung sein. Insbesondere kann es sich um eine Anlage zur Gewinnung von molekularem Wasserstoff H₂ handeln. Alternativ oder zusätzlich kann die Anlage dazu gestaltet sein, ein Verfahren zur Kohlevergasung oder -verflüssigung auszuführen. Hierunter fällt auch das Fischer-Tropsch-Verfahren, mit dem Methan, Methanol und Alkane produziert werden können.

Der wesentliche Gedanke der Erfindung kann auch allgemein bei Anlagen genutzt werden, die mit einer Brenneinrichtung Wärmeenergie bereitstellen, indem ein Energieträger verbrannt wird. Beispielsweise kann solch eine Anlage ein Zementwerk sein, bei dem zur Zementherstellung Wärmeenergie benötigt wird, die durch Verbrennen des Energieträgers bereitgestellt wird. Gemäß dem Erfindungsgedanken wird auch hier eine elektrische Heizeinheit eingesetzt. Die Steuereinheit kann einstellen, zu welchen Anteilen Wärmeenergie von der elektrischen Heizeinheit und von der Brenneinrichtung bereitgestellt wird. Die Brenneinrichtung kann wie die Reformer-Brenneinrichtung gestaltet sein. Die Steuereinheit und die elektrische Heizeinheit können wie zu der Kraftwerksanlage beschrieben ausgeführt sein. Insbesondere kann die Steuerung derart sein, dass für verschiedene Verhältnisse zwischen der Wärmeenergie von der elektrischen Heizeinheit und der Wärmeenergie der Brenneinrichtung stets eine gleichbleibende gesamte Wärmeenergie oder -menge freigesetzt wird. Die Heizleistung der elektrischen Heizeinheit kann umso höher gewählt sein, je niedriger ein momentaner Strompreis ist.

Weitere Merkmale und Vorteile der Erfindung werden nachstehend mit Bezug auf die beigefügten schematischen Zeichnungen beschrieben. Hierin zeigen:
- Fig. 1: ein Ausführungsbeispiel einer erfindungsgemäßen Kraftwerksanlage, bei der Erdgas als Energieträger genutzt wird;
- Fig. 2: ein Ausführungsbeispiel einer erfindungsgemäßen Kraftwerksanlage, bei der Kohle als Energieträger genutzt wird;
- Fig. 3: ein Ausführungsbeispiel einer Reformer-Einheit und einer elektrischen Heizeinheit einer erfindungsgemäßen Kraftwerksanlage;
- Fig. 4: ein weiteres Ausführungsbeispiel einer Reformer-Einheit und einer elektrischen Heizeinheit einer erfindungsgemäßen Kraftwerksanlage;
- Fig. 5: ein drittes Ausführungsbeispiel einer Reformer-Einheit und einer elektrischen Heizeinheit einer erfindungsgemäßen Kraftwerksanlage und

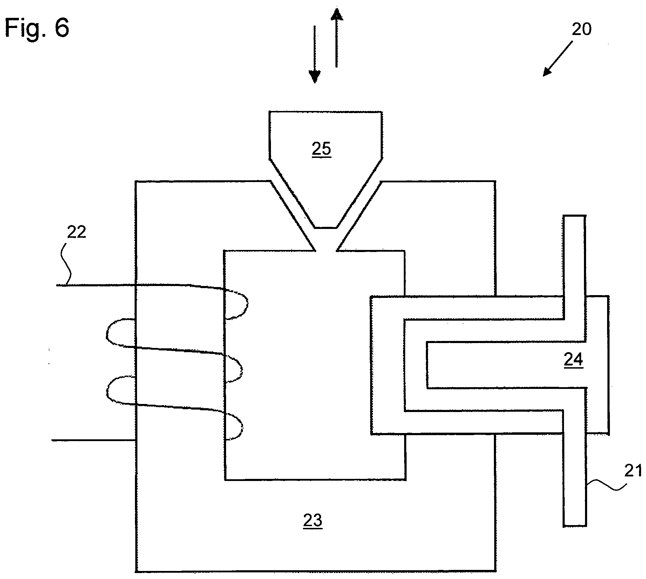

- Fig. 6: ein Ausführungsbeispiel einer elektrischen Heizeinheit einer erfindungsgemäßen Kraftwerksanlage.

Gleiche und gleich wirkende Komponenten sind in den Figuren in der Regel mit den gleichen Bezugszeichen versehen.

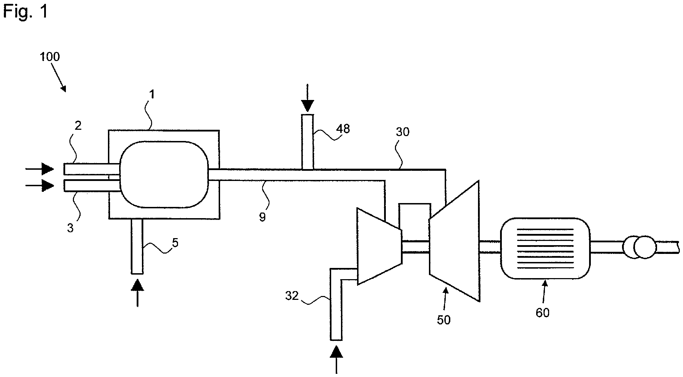

Fig. 1 zeigt schematisch ein Ausführungsbeispiel einer erfindungsgemäßen Kraftwerksanlage 100. Diese weist als wesentliche Bestandteile eine Reformer-Einheit 1, eine Brennereinheit 30, eine Turbineneinheit 50 und eine Generatoreinheit 60 auf. Zudem werden eine Reformer-Brenneinrichtung 10 und eine elektrische Heizeinheit 20 genutzt, die in Fig. 1 nicht dargestellt und im späteren näher beschrieben werden.

Die Reformer-Einheit 1 weist Einlässe 2, 3 für einen Energieträger auf. Beispielsweise können über die Einlässe 2 und 3 ein Gas wie zum Beispiel Erdgas und Wasser in die Reformer-Einheit 1 eingeleitet werden. Dort wird der Energieträger in ein Verbrennungsfluid umgesetzt. Erdgas und Wasser werden beispielsweise in Kohlenmonoxid und molekularen Wasserstoff umgesetzt. Dieses Gasgemisch wird auch als Synthesegas bezeichnet.

Über einen Auslass 9 wird das Verbrennungsfluid, das heißt das Synthesegas, von der Reformer-Einheit 1 zu der Brennereinheit 30 geleitet.

Eine weitere Zufuhrleitung 48 kann vorgesehen sein, mit welcher Erdgas zusätzlich zum Synthesegas zu der Brennereinheit 30 geführt wird.

In der Brennereinheit 30 wird das Verbrennungsfluid und gegebenenfalls vorhandenes Erdgas verbrannt, womit thermische Energie erzeugt wird. Damit wird die Turbineneinheit 50 angetrieben. Über einen Einlass 32 kann Luft zugeführt werden.

Durch eine Drehbewegung der Turbineneinheit 50 kann schließlich die Generatoreinheit 60 elektrische Energie erzeugen.

Damit in der Reformer-Einheit 1 der Energieträger in das Verbrennungsfluid umgesetzt werden kann, also Erdgas in Synthesegas umgesetzt werden kann, ist eine Energie- oder Wärmezufuhr erforderlich. Daher sind Mittel 5 zur Energie- oder Wärmezufuhr an die Reformereinheit 1 vorhanden.

Bei herkömmlichen Kraftwerksanlagen sind die Mittel 5 durch eine Reformer-Brenneinrichtung gebildet, welche beispielsweise Erdgas verbrennt, um Wärmeenergie bereitzustellen.

Bei der Erfindung umfassen die Mittel 5 hingegen zusätzlich zur Reformer-Brenneinrichtung auch eine elektrische Heizeinheit.

Dadurch ist variabel einstellbar, zu welchen Anteilen eine gewünschte Wärmeenergie durch die Reformer-Brenneinrichtung und durch die elektrische Heizeinheit bereitgestellt werden.

Vorteilhafterweise kann dadurch elektrische Energie zur Wärmeerzeugung gerade dann genutzt werden, wenn diese kostengünstig bereitgestellt werden kann. Dies ist beispielsweise der Fall, wenn Windkraftanlagen oder Sonnenenergieanlagen vorübergehend mehr elektrischen Strom produzieren. Ist hingegen kein überschüssiger elektrischer Strom verfügbar, kann in prinzipiell herkömmlicher Weise durch Verbrennen des Energieträgers die erforderliche Wärmeenergie erzeugt werden.

Vorteilhafterweise können so große Mengen an überschüssiger elektrischer Energie genutzt werden, für die ansonsten keine sinnvolle Nutzung gegeben wäre. Dadurch kann bei der Erfindung die Rate reduziert werden, mit der der Energieträger verbrannt wird. Vorteilhafterweise kann dadurch ein Teil des Energieträgers gespart werden.

Somit kann die Energieträgermenge, die pro Zeiteinheit verbrannt wird, variiert werden, ohne dass die elektrische Leistung, die von der Generatoreinheit erzeugt wird, verändert wird. Dadurch können die Turbineneinheit und die Generatoreinheit in etwa gleichbleibend betrieben werden, obwohl die Verbrennungsrate des Energieträgers verändert wird. Im Gegensatz zu herkömmlichen Kraftwerksanlagen ist eine maximale Änderungsrate der Verbrennung des Energieträgers nicht mehr durch die Turbineneinheit und die Generatoreinheit beschränkt. Daher sind sehr große Änderungsraten möglich, womit effektiv auf Änderungen der verfügbaren Strommenge in einem externen Netz reagiert werden kann.

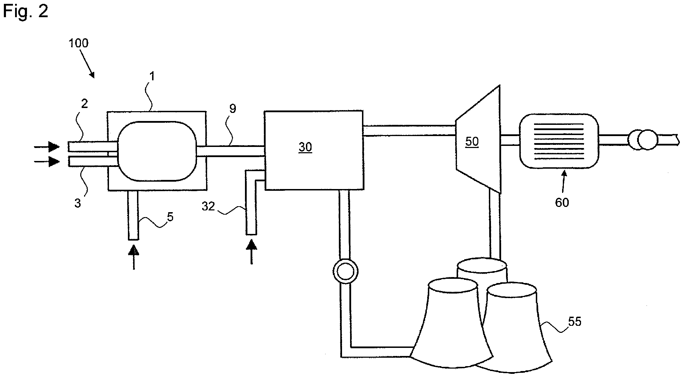

Ein weiteres Ausführungsbeispiel einer erfindungsgemäßen Kraftwerksanlage 100 ist schematisch in Fig. 2 dargestellt. Diese ist dazu gestaltet, dass die Reformer-Einheit 1 an Stelle von Erdgas Kohle verwendet, um Synthesegas zu erzeugen. Dieses wird an den Auslass 9 abgegeben und sodann in der Brennereinheit 30 verbrannt. Das dabei entstehende Fluid wird an die Turbineneinheit 50 und weiter an Türme 55 zum Ausgeben von Abgasen und/oder zurück zur Brennereinheit 30 geleitet.

Im Übrigen kann diese Kraftwerksanlage 100 gleich der aus Fig. 1 sein.

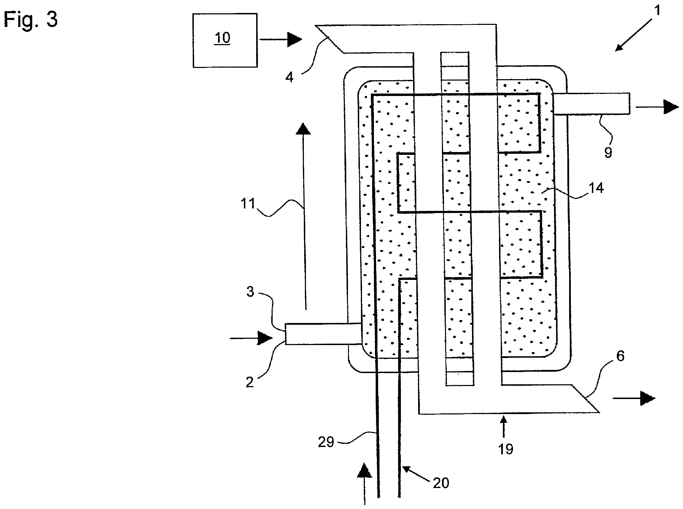

Eine Ausführungsform einer Reformer-Einheit 1 einer erfindungsgemäßen Kraftwerksanlage ist schematisch in Fig. 3 gezeigt. Diese Reformer-Einheit 1 ist insbesondere dazu geeignet, aus Erdgas und Wasser Synthesegas zu erzeugen. Durch einen Einlass 2, 3 werden Erdgas und Wasser in eine Kammer 14 der Reformer-Einheit 1 eingeleitet. Dort ist ein Katalysator aufgenommen, mit dem sie zu Synthesegas umgesetzt werden, welches sodann die Kammer 14 über den Auslass 9 verlässt.

Für die Umsetzung in Synthesegas ist eine Wärmezufuhr erforderlich. Hierzu ist zum einen ein Wärmetauscher 19 vorhanden. Durch diesen strömt ein heißes Fluid von einem Einlass 4 zu einem Auslass 6, wobei es Wärme an die Medien in der Kammer 14 abgibt. Das heiße Fluid ist von einer Reformer-Brenneinrichtung 10 erhitzt worden. Diese verbrennt einen Energieträger, bei dem es sich beispielsweise um Erdgas handeln kann.

Prinzipiell kann die Reformer-Brenneinrichtung 10 den gleichen Energieträger nutzen, der auch zur Umwandlung in Synthesegas oder in ein anderes Verbrennungsfluid genutzt wird. Im dargestellten Beispiel wird Erdgas sowohl zur Wärmeerzeugung mit der Reformer-Brenneinrichtung 10 genutzt als auch zur Umwandlung in Synthesegas. Alternativ können aber auch verschiedene Energieträger von der Reformer-Brenneinrichtung 10 und zur Umwandlung in Synthesegas verwendet werden.

Durch die Wärmeabgabe vom Wärmetauscher 19 entsteht ein Temperaturgradient in der Kammer 14, wobei die Temperatur in Richtung des Pfeils 11 ansteigt. Durch die erhöhte Temperatur kann Synthesegas erzeugt werden.

Zusätzlich ist auch eine elektrische Heizeinheit 20 vorhanden. Diese weist elektrische Widerstandselemente 29 auf, welche sich durch die Kammer 14 erstrecken. Auch hiermit kann Wärme an die Medien in der Kammer 14 abgegeben werden, um Synthesegas zu erzeugen.

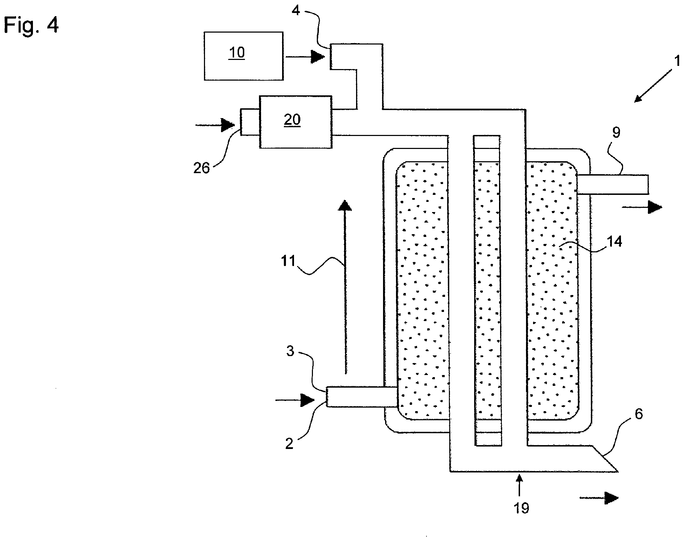

Ein weiteres Ausführungsbeispiel einer Reformer-Einheit 1 einer erfindungsgemäßen Kraftwerksanlage ist schematisch in Fig. 4 dargestellt. Wie im vorangehenden Beispiel wird auch hier ein Wärmetauscher 19 verwendet, durch den ein heißes Fluid geleitet wird, welches durch die Reformer-Brenneinrichtung 10 erhitzt worden ist. Im Unterschied zum vorangehenden Ausführungsbeispiel erhitzt hier jedoch die elektrische Heizeinheit 20 zunächst ein Fluid, beispielsweise Luft, das über einen Einlass 26 in die elektrische Heizeinheit eingeleitet wird. Das erhitzte Fluid wird ebenfalls durch den Wärmetauscher 19 geleitet. Vorteilhafterweise ist hierdurch kein weiterer Eingriff in die Kammer 14 erforderlich. Zudem können herkömmliche Reformer-Einheiten 1 besonders leicht nachgerüstet werden. Dazu ist lediglich am Wärmetauscher 19, der bereits für den Wärmetransfer von der Reformer-Brenneinrichtung 10 vorhanden ist, ein weiterer Anschluss erforderlich. An diesen wird die elektrische Heizeinheit 20 verbunden. Die elektrische Heizeinheit 20 kann auch bei dieser Ausführung in prinzipiell beliebiger Weise ausgeführt sein. Beispielsweise kann sie resistive Widerstandselemente oder Induktionsspulen aufweisen. Zudem kann sie auch eine Plasmafackel umfassen.

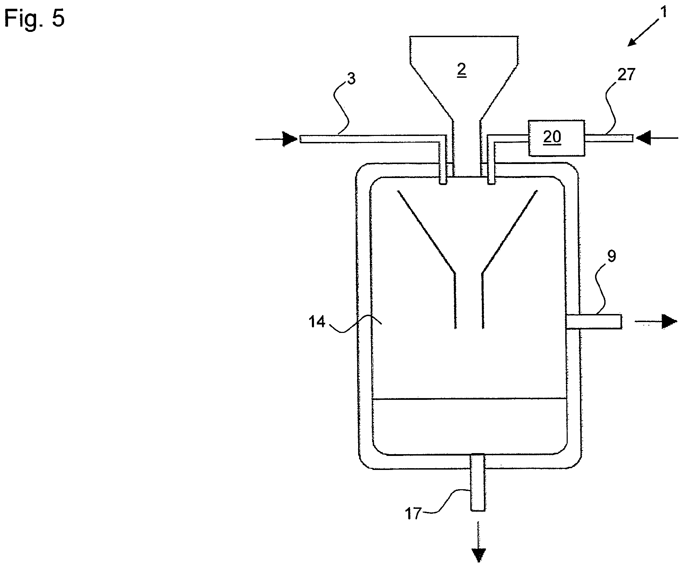

Ein weiteres Ausführungsbeispiel einer Reformer-Einheit 1 einer erfindungsgemäßen Kraftwerksanlage ist in Fig. 5 gezeigt. Diese ist als Kohlevergaser gestaltet, das heißt sie kann Kohle als Energieträger zu verwenden und diese in Synthesegas umsetzen.

Hierzu werden über einen Einlass 2 Kohle und über einen Einlass 3 Sauerstoff in die Kammer 14 eingeleitet. Über einen weiteren Einlass 27 wird Wasser, in flüssiger oder gasförmiger Phase, der Kammer 14 zugeführt.

Indem in der Kammer 14 ein Anteil der Kohle 2 mit dem Sauerstoff verbrannt wird, wird Wärmeenergie erzeugt. Durch diese wird ein anderer Anteil der Kohle mit dem Wasser zu Synthesegas umgesetzt. Sodann wird das Synthesegas durch den Auslass 9 ausgeleitet. Reststoffe werden in einem unteren Teil der Kammer 14, der auch als Quencher bezeichnet wird, in die feste Phase überführt und durch einen Auslass 17 abgeleitet. Die Reformer-Brenneinrichtung ist hier also durch die Kammer 14 gebildet, in welcher Kohle unter Sauerstoffzufuhr verbrannt wird.

Von herkömmlichen Kohlevergasern unterscheidet sich diese Reformer-Einheit 1 durch eine zusätzliche elektrische Heizeinheit 20. Mit dieser kann das Wasser erhitzt werden, bevor es in die Kammer 14 eingeleitet wird. Insbesondere kann das Wasser überkritisch erhitzt werden.

Indem auf diese Weise die elektrische Heizeinheit 20 thermische Energie bereitstellt, muss weniger Kohle mit Sauerstoff verbrannt werden, um insgesamt genügend Wärmeenergie zu erzeugen. Daher kann eine Steuereinheit dazu eingerichtet sein, die Menge an eingeleiteter Kohle und eingeleitetem Sauerstoff abhängig von der Heizleistung der elektrischen Heizeinheit 20 einzustellen. Je höher die Heizleistung ist, desto weniger Kohle und Sauerstoff werden eingeleitet.

Prinzipiell kann aber auch hier eine elektrische Heizeinheit vorgesehen sein, die an anderer Stelle Wärmeenergie zuführt. So können beispielsweise alternativ oder zusätzlich auch Heizelemente innerhalb der Kammer 14 angeordnet sein.

Die elektrische Heizeinheit kann auch zum induktiven Erhitzen gestaltet sein. Ein Beispiel hierfür ist in Fig. 3 gezeigt. Die dort abgebildete elektrische Heizeinheit 20 weist zunächst eine oder mehrere Spulen 22 auf, an die eine Wechselspannung angelegt wird. Das dadurch variierende magnetische Feld wird über ein Leitmaterial 23 geführt, beispielsweise einen Eisenkern 23. Ein zu erhitzendes Medium wird durch einen Kanal 21 geleitet, welcher durch ein wärmeleitendes Material 24 führt. Durch das Magnetfeld wird in dem Material 24 ein Strom induziert und somit Wärme erzeugt, welche auf das Medium im Kanal 21 übertragen wird. Hiermit wird eine kostengünstige und schnell einstellbare Möglichkeit zur Umwandlung elektrischer Energie in thermische Energie bereitgestellt. Das schnelle Einstellen erfolgt über einen Schalter 25. Dieser kann einen Luftabstand im Leitmaterial 23 schließen, wodurch das Leitmaterial 23 einen geschlossenen Ring bildet. Dadurch erfolgt eine verstärkte Führung des Magnetfelds im Leitmaterial 23.

Zum Nachrüsten herkömmlicher Kraftwerksanlagen müssen vorteilhafterweise lediglich Änderungen an der Reformer-Einheit vorgenommen werden. Die darauf folgenden Einheiten, insbesondere die Brenneinheit, die Turbineneinheit und die Generatoreinheit, können unverändert bleiben.

Mit der erfindungsgemäßen Kraftwerksanlage wird vorteilhafterweise ermöglicht, die Verbrennungsrate eines Energieträgers, wie zum Beispiel Kohle oder Erdgas, besonders schnell zu variieren. Damit wird es möglich, ein Überangebot an elektrischer Energie sinnvoll zu nutzen. Im Ergebnis können dadurch fossile Brennstoffe gespart werden, die ansonsten verbrannt würden. Als Folge werden vorteilhafterweise auch CO₂-Emissionen reduziert.

## Patentansprüche

1. Kraftwerksanlage zur Erzeugung elektrischen Stroms mit
- einer Brennereinheit (30), in welcher durch Verbrennen eines Verbrennungsfluids thermische Energie erzeugbar ist,
- einer Turbineneinheit (50), in welcher mit der thermischen Energie eine Drehbewegung erzeugbar ist,
- einer Generatoreinheit (60), welche zum Erzeugen von elektrischem Strom von der Drehbewegung antreibbar ist, und
- einer Reformereinheit, in welcher ein Energieträger unter Wärmezufuhr in das Verbrennungsfluid umsetzbar ist, wobei die Reformer-Einheit (1) zum Bereitstellen einer Wärmezufuhr eine Reformer-Brenneinrichtung (10) aufweist, mit der ein Energieträger verbrennbar ist, **dadurch gekennzeichnet, dass** die Kraftwerksanlage zum Bereitstellen einer Wärmezufuhr zusätzlich zu der Reformer-Brenneinrichtung (10) eine elektrische Heizeinheit (20) aufweist, durch welche elektrische Energie in Wärmeenergie wandelbar ist, dass die Kraftwerksanlage eine Steuereinheit umfasst, mit welcher eine Heizleistung der elektrischen Heizeinheit (20) erhöhbar und eine Heizleistung der Reformer-Brenneinrichtung (10) reduzierbar ist, und umgekehrt, und
dass die Steuereinheit dazu eingerichtet ist, abhängig von der verfügbaren Menge an elektrischer Energie in einem externen Stromnetz die Heizleistung der elektrischen Heizeinheit (20) zu erhöhen und die Heizleistung der Reformer-Brenneinrichtung (10) zu reduzieren.

2. Kraftwerksanlage nach Anspruch 1,
**dadurch gekennzeichnet,**
**dass** das Verbrennungsfluid, das mit der Reformer-Einheit (1) erzeugbar ist, Synthesegas ist.

3. Kraftwerksanlage nach Anspruch 1 oder 2,
**dadurch gekennzeichnet,**
**dass** die Reformer-Einheit (1) einen Kohlevergaser oder -verflüssiger umfasst.

4. Kraftwerksanlage nach einem der Ansprüche 1 bis 3,
**dadurch gekennzeichnet,**
**dass** die Reformer-Einheit (1) einen Gas-Reformer umfasst, mit dem ein Gas als Energieträger in das Verbrennungsfluid umsetzbar ist.

5. Kraftwerksanlage nach einem der Ansprüche 1 bis 3,
**dadurch gekennzeichnet,**
**dass** die Reformer-Einheit (1) einen Wärmetauscher (19) aufweist, mit dem Wärmeenergie an den Energieträger übertragbar ist,
**dass** der Wärmetauscher (19) sowohl von der Reformer-Brenneinrichtung (10) als auch von der elektrischen Heizeinheit (20) zur Abgabe von Wärmeenergie nutzbar ist.

6. Kraftwerksanlage nach einem der Ansprüche 1 bis 5,
**dadurch gekennzeichnet,**
**dass** die elektrische Heizeinheit (20) elektrische Widerstandselemente (29) zum Umwandeln von elektrischer Energie in Wärmeenergie aufweist.

7. Kraftwerksanlage nach einem der Ansprüche 1 bis 6,
**dadurch gekennzeichnet,**
**dass** die elektrische Heizeinheit (20) eine Plasmafackel zum Erhitzen eines Mediums aufweist, von welchem Wärme an den Energieträger übertragbar ist, um dieses in Verbrennungsfluid umzusetzen.

8. Kraftwerksanlage nach einem der Ansprüche 1 bis 7,
**dadurch gekennzeichnet,**
**dass** die elektrische Heizeinheit (20) zum Erhitzen eines Mediums Induktionsmittel (22, 23) aufweist und
**dass** eine Heizleistung der Induktionsmittel (22, 23) durch Verändern eines magnetischen Widerstands an den Induktionsmitteln steuerbar ist.

9. Kraftwerksanlage nach einem der Ansprüche 1 bis 8,
**dadurch gekennzeichnet,**
**dass** durch die Steuereinheit die Heizleistungen von elektrischer Heizeinheit (20) und Reformer-Brenneinrichtung (10) so voneinander abhängig steuerbar sind, dass die Rate, mit der Verbrennungsfluid erzeugt wird, gleichbleibend ist oder sich höchstens um eine vorgegebene maximale Änderungsrate ändert.

10. Kraftwerksanlage nach einem der Ansprüche 1 bis 9,
**dadurch gekennzeichnet,**
**dass** durch die Steuereinheit die Heizleistungen von elektrischer Heizeinheit (20) und Reformer-Brenneinrichtung (10) so voneinander abhängig steuerbar sind, dass eine Temperatur in der Reformer-Einheit (1) in einem vorgegebenen Sollbereich liegt, in welchem der Energieträger in Verbrennungsfluid umsetzbar ist.

11. Verfahren zum Erzeugen von elektrischem Strom, insbesondere mit einer Kraftwerksanlage nach einem der Ansprüche 1 bis 10,
- wobei in einer Brennereinheit (30) ein Verbrennungsfluid verbrannt und damit thermische Energie erzeugt wird,
- wobei in einer Turbineneinheit (50) die thermische Energie in eine Drehbewegung umgewandelt wird,
- wobei eine Generatoreinheit (60) von der Drehbewegung angetrieben wird und hierdurch elektrischer Strom erzeugt wird,
- wobei in einer Reformer-Einheit (1) ein Energieträger unter Wärmezufuhr in das zu verbrennende Verbrennungsfluid umgesetzt wird, und wobei zum Bereitstellen der Wärmezufuhr mit einer Reformer-Brenneinrichtung (10) ein Energieträger verbrannt wird,
**dadurch gekennzeichnet, dass** die Wärmezufuhr zusätzlich zur Reformer-Brenneinrichtung (10) durch eine elektrische Heizeinheit (20) bereitgestellt wird, durch welche elektrische Energie in Wärmeenergie umgewandelt wird, und
dass abhängig von der verfügbaren Menge an elektrischer Energie in einem externen Stromnetz die Heizleistung der elektrischen Heizeinheit (20) erhöht und die Heizleistung der Reformer-Brenneinrichtung (10) reduziert wird.

## Claims

1. Power plant for generating electrical power, having
- a burner unit (30), in which thermal energy can be produced by burning a combustion fluid,
- a turbine unit (50), in which a rotational movement can be produced with the thermal energy,
- a generator unit (60) which can be driven by the rotational movement to generate electrical power, and
- a reformer unit (1), in which the energy carrier can be converted into combustion fluid with the supply of heat, wherein the reformer unit (1) has, for the purpose of providing a heat supply, a reformer burning device (10), with which an energy carrier can be burnt,
**characterised in that**
in order to provide a heat supply, the power plant comprises an electric heating unit (20) in addition to the reformer burning device (10), through which electric heating unit (20) electrical energy can be converted into heat energy,
the power plant comprises a control unit, with which a heating power of the electric heating unit (20) can be increased and a heating power of the reformer burning device (10) can be reduced, and vice versa, and
the control unit is adapted, in dependence upon the available amount of electrical energy in an external power network, to increase the heating power of the electric heating unit (20) and to reduce the heating power of the reformer burning device (10).

2. Power plant according to claim 1,
**characterised in that**
the combustion fluid which can be produced with the reformer unit (1) is synthesis gas.

3. Power plant according to claim 1 or 2,
**characterised in that**
the reformer unit (1) comprises a coal gasification unit or coal liquefaction unit.

4. Power plant according to one of the claims 1 to 3,
**characterised in that**
the reformer unit (1) comprises a gas reformer, with which a gas can be converted as an energy carrier into the combustion fluid.

5. Power plant according to one of the claims 1 to 3,
**characterised in that**
the reformer unit (1) has a heat exchanger (19), with which heat energy can be transferred to the energy carrier,
the heat exchanger (19) can be used both by the reformer burning device (10) and by the electric heating unit (20) to output heat energy.

6. Power plant according to one of the claims 1 to 5,
**characterised in that**
the electric heating unit (20) has electrical resistor elements (29) to convert electrical energy into heat energy.

7. Power plant according to one of the claims 1 to 6,
**characterised in that**
the electric heating unit (20) has a plasma torch for heating a medium, from which heat can be transferred to the energy carrier, in order to convert it into combustion fluid.

8. Power plant according to one of the claims 1 to 7,
**characterised in that**
the electric heating unit (20) has induction means (22, 23) to heat a medium and a heating power of the induction means (22, 23) can be controlled by changing a magnetic resistance on the induction means.

9. Power plant according to one of the claims 1 to 8,
**characterised in that**
the heating powers of the electric heating unit (20) and the reformer burning device (10) can be controlled in dependence upon each other by the control unit in such a way that the rate, at which combustion fluid is produced, remains constant or at most changes by a predefined maximum change rate.

10. Power plant according to one of the claims 1 to 9,
**characterised in that**
the heating powers of the electric heating unit (20) and reformer burning device (10) can be controlled in dependence upon each other by the control unit in such a way that a temperature in the reformer unit (1) lies in a predefined target range, in which the energy carrier can be converted into combustion fluid.

11. Method for generating electrical power, in particular with a power plant according to one of the claims 1 to 10,
- wherein a combustion fluid is burnt in a burner unit (30) and thermal energy is thus produced,
- wherein the thermal energy is converted in a turbine unit (50) into a rotational movement,
- wherein a generator unit (60) is driven by the rotational movement and electrical power is hereby generated,
- wherein an energy carrier is converted in a reformer unit (1), with heat supply, into the combustion fluid which is to be burnt, and
- wherein an energy carrier is burnt with a reformer burning device (10) in order to provide the heat supply,
**characterised in that**
in addition to being provided by the reformer burning device (10), the heat supply is provided by an electric heating unit (20), through which electrical energy is converted into heat energy, and
in dependence upon the available amount of electrical energy in an external power network, to increase the heating power of the electric heating unit (20) and to reduce the heating power of the reformer burning device (10).

## Revendications

1. Centrale électrique pour générer du courant électrique, comportant :
- - une unité de brûleur (30) dans laquelle de l'énergie thermique peut être produite en brûlant un fluide de combustion,
- - une unité de turbine (50) dans laquelle un mouvement rotatif peut être produit avec l'énergie thermique,
- - une unité de générateur (60) qui peut être actionnée par le mouvement rotatif pour générer du courant électrique, et
- une unité de reformeur (1), dans laquelle le vecteur d'énergie peut être converti en fluide de combustion par apport de chaleur, l'unité de reformeur (1) ayant, pour fournir un apport en chaleur, un dispositif de combustion de reformeur (10) avec lequel un vecteur d'énergie peut être brûlé,
**caractérisée en ce que**
dans le but de fournir un apport en chaleur, la centrale électrique comporte, en plus du dispositif de combustion de reformeur (10), une unité de chauffage électrique (20) par le biais de laquelle de l'énergie électrique peut être convertie en énergie thermique,
la centrale électrique comporte une unité de commande avec laquelle une puissance de chauffage de l'unité de chauffage électrique (20) peut être augmentée et une puissance de chauffage du dispositif de combustion de reformeur (10) peut être réduite, et inversement, et
l'unité de commande est conçue pour augmenter la puissance de chauffage de l'unité de chauffage électrique (20) et pour réduire la puissance de chauffage du dispositif de combustion de reformeur (10) en fonction de la quantité d'énergie électrique disponible dans réseau électrique externe.

2. Centrale électrique selon la revendication 1
**caractérisée en ce que**
le fluide de combustion qui peut être produit avec l'unité de reformeur (1) est du gaz de synthèse.

3. Centrale électrique selon la revendication 1 ou 2
**caractérisée en ce que**
l'unité de reformeur (1) comprend une unité de gazéification de charbon ou une unité de liquéfaction de charbon.

4. Centrale électrique selon une des revendications 1 à 3
**caractérisée en ce que**
l'unité de reformeur (1) comprend un reformeur de gaz avec lequel un gaz peut être transformé, en tant que vecteur d'énergie, en fluide de combustion.

5. Centrale électrique selon une des revendications 1 à 3
**caractérisée en ce que**
l'unité de reformeur (1) comporte un échangeur de chaleur (19) avec lequel de l'énergie thermique peut être transférée au vecteur d'énergie,
l'échangeur de chaleur (19) peut être utilisé aussi bien par le dispositif de combustion de reformeur (10) que par l'unité de chauffage électrique (20) pour émettre de l'énergie thermique.

6. Centrale électrique selon une des revendications 1 à 5
**caractérisée en ce que**
l'unité de chauffage électrique (20) comporte des éléments de résistance électrique (29) pour convertir de l'énergie électrique en énergie thermique.

7. Centrale électrique selon une des revendications 1 à 6
**caractérisée en ce que**
l'unité de chauffage électrique (20) comporte une torche plasma pour chauffer un milieu, à partir duquel de la chaleur peut être transférée au vecteur d'énergie, afin de le transformer en fluide de combustion.

8. Centrale électrique selon une des revendications 1 à 7
**caractérisée en ce que**
l'unité de chauffage électrique (20) possède un moyen d'induction (22, 23) pour chauffer un milieu et
une puissance de chauffage du moyen d'induction (22, 23) peut être contrôlée en modifiant une résistance magnétique au niveau du moyen d'induction.

9. Centrale électrique selon une des revendications 1 à 8
**caractérisée en ce que**
les puissances de chauffage de l'unité de chauffage électrique (20) et du dispositif de combustion de reformeur (10) peuvent être commandées par l'unité de commande en fonction les unes des autres, de telle sorte que le taux auquel le fluide de combustion est produit demeure constant ou, tout au plus, varie d'un taux de change maximum prédéfini.

10. Centrale électrique selon une des revendications 1 à 9
**caractérisée en ce que**
les puissances de chauffage de l'unité de chauffage électrique (20) et du dispositif de combustion de reformeur (10) peuvent être commandées par l'unité de commande en fonction les unes des autres, de sorte qu'une température dans l'unité de reformeur (1) soit située dans une fourchette cible prédéfinie, dans laquelle le vecteur d'énergie peut être converti en fluide de combustion.

11. Procédé pour générer du courant électrique, en particulier avec une centrale électrique selon une des revendications 1 à 10, tandis que
- un fluide de combustion est brûlé dans une unité de brûleur (30) et de l'énergie thermique est ainsi produite,
- dans une unité de turbine (50), l'énergie thermique est convertie en un mouvement rotatif,
- une unité de générateur (60) est entraînée par le mouvement rotatif et du courant électrique est ainsi généré,
- dans une unité de reformeur (1), un vecteur d'énergie est converti, avec un apport de chaleur, en un fluide de combustion à brûler, et
- un vecteur d'énergie est brûlé avec un dispositif de combustion de reformeur (10) afin de fournir l'apport de chaleur,
**caractérisé en ce que**
en plus d'être fourni par le dispositif de combustion de reformeur (10), l'apport en chaleur est fourni par une unité de chauffage électrique (20), par le biais de laquelle de l'énergie électrique est convertie en énergie thermique, et
en fonction de la quantité d'énergie électrique disponible dans un réseau électrique externe, la puissance de chauffage de l'unité de chauffage électrique (20) est augmentée et la puissance de chauffage du dispositif de combustion du reformeur (10) est réduite.
